# EUROPÄISCHE PATENTSCHRIFT

(11) **EP 2 039 494 B1**
(45) Veröffentlichungstag und Bekanntmachung des Hinweises auf die Patenterteilung: **23.03.2011**
(21) Anmeldenummer: 08010100.9
(22) Anmeldetag: 03.06.2008
(51) Int. Cl.: B29C 70/48, E04D 13/14

(54) **Verfahren zum Herstellen einer Rohrdurchführung für eine Dachabdeckung sowie nach diesem Verfahren hergestellte Rohrdurchführung**
Method for manufacturing a tube lead through for a roof covering and tube lead through obtained thereby
Procédé de fabrication d'un passage de conduite pour un recouvrement de toit et passage de conduite ainsi obtenu

(43) Veröffentlichungstag der Anmeldung: 25.03.2009
(73) Patentinhaber: IVT - Industrie Vertrieb Technik GmbH & Co. KG, 59439 Holzwickede (DE)
(72) Erfinder: Hanczyk,Mariusz, 87500 Rypin (PL)
(74) Vertreter: von dem Borne, Andreas

(56) Entgegenhaltungen:
- DE-A1- 3 643 319
- DE-U1- 9 211 551

## Beschreibung

Die Erfindung betrifft ein Verfahren zum Herstellen einer Rohrdurchführung, insbesondere eines Sanitärlüfters, für eine Dacheindeckung, welche zumindest aus einer Grundplatte mit einer Öffnung und einem durch die Öffnung hindurch geführten oder hindurchführbaren Rohr besteht. Eine solche Rohrdurchführung wird in der Regel für die Dacheindeckung von Steildächern eingesetzt. Das durch die Öffnung der Grundplatte hindurch geführte Rohr ist zur Anpassung an verschiedene Dachneigungen relativ zu der Grundplatte neigungsverstellbar. Dazu kann die Grundplatte einen kuppelartigen Dom aufweisen, in dessen Scheitelbereich die Durchtrittsöffnung für das neigungsverstellbare Rohr angeordnet ist. Das Rohr weist einen an die Form des Doms angepasstes kragenartiges Haubenteil auf, welches auf den kuppelartigen Dom der Grundplatte aufgesetzt bzw. aufsetzbar ist. Eine solche Rohrdurchführung ist beispielsweise aus der DE 87 16 037 U1 oder der EP 0 276 389 B1 bekannt.

Die Grundplatte einer solchen Rohrdurchführung ist in ihrer Geometrie und insbesondere ihrer Querschnittsform an die Geometrie bzw. die Querschnittsform der zu verwendenden Dachplatten bzw. Dachpfannen angepasst. Da in der Praxis eine Vielzahl unterschiedlichster Dachplatten bzw. Dachpfannen verfügbar ist, wird in der Regel auch eine Vielfalt von Grundplatten für derartige Dachentlüfter benötigt. Während folglich die Grundplatten an ein bestimmtes Dachsystem angepasst sind, können in der Regel universell einsetzbare Rohre verwendet werden, welche dann mit unterschiedlichsten Grundplatten kombinierbar sind.

Aus der Praxis ist es bekannt, die Grundplatten für solche Rohrdurchführungen und insbesondere Sanitärlüfter im Wege des Spritzgießens aus thermoplastischem Kunststoff herzustellen. Die erforderlichen Spritzgieß-Werkzeuge sind jedoch mit verhältnismäßig hohen Kosten verbunden. Dieses ist insbesondere deshalb nachteilig, weil für verschiedene Grundplatten-Geometrien verschiedene Spritzgieß-Werkzeuge zur Verfügung stehen müssen.

Alternativ werden derartige Grundplatten aus vorgefertigten Formteilen im Wege des Tiefziehens hergestellt. Die erforderlichen Werkzeuge sind zwar kostengünstiger als vergleichbare Spritzgieß-Werkzeuge, die Qualität der im Wege des Tiefziehens hergestellten Grundplatten ist jedoch nicht immer ausreichend. Insgesamt ergibt sich bei dem Einsatz von thermoplastischen Kunststoffen das Problem, dass thermische Einflüsse zu Verformungen und damit zu Problemen führen können. Dieses ist insbesondere deshalb nachteilig, weil die verbauten Elemente häufig sehr hohen Temperaturen ausgesetzt sind.

Aus der DE 92 11 551 U1 kennt man einen Dachentlüfler sowie ein Herstellungverfahren gemäβ dem Oberbegriff des Anspruchs 1, bei dem die Grundplatte ein Loch aufweist, von dessen Randbereich ein Dom ausgeht. Dieser dort angesetzte Dom besitzt eine nach oben gehende, kuppelförmige Wölbung. Der Dom besteht aus Kunststoff, insbesondere Hart-PVC. Er ist an die Grundplatte angespritzt. Auch das Lüftungsrohr dieses Dachentlüfters besteht aus Kunststoff, vorzugsweise Hart-PVC.

Im Übrigen ist es bekannt, Bedachungselemente aus faserverstärkten Harzen herzustellen. So schlägt beispielsweise die DE 27 25 494 die Herstellung eines Bedachungselementes in Form einer aus einem faserverstärkten Harz geformten Hohlplatte vor.

Aus der DE 87 14 973 kennt man ein Deckelement, wie z. B. eine Dachplatte aus einer faserverstärkten Schichtstruktur.

Ferner kennt man Großdachplatten aus Metall oder Kunststoff, wobei bevorzugt glasfaserverstärktes Polyester eingesetzt wird (vgl. DE 17 76 548).

Außerdem ist ein großflächiges plattenförmiges Bauelement aus vorzugsweise faserverstärktem duroplastischen Kunstharzlaminat bekannt, das in Abständen von ausgesteiften, profilebildenden Hohlräumen durchzogen ist (vgl. DE 1 784 047).

Auf die Entwicklung von Rohrdurchführungen und insbesondere Grundplatten für Rohrdurchführungen, z. B. Sanitärlüfter bzw. Dachentlüfter, hatten derartige Vorschläge keinen Einfluss.

Der Erfindung liegt die Aufgabe zugrunde, ein Verfahren zum kostengünstigen Herstellen einer hochwertigen und insbesondere stabilen Rohrdurchführung, insbesondere eines Sanitärentlüfters bzw. Dachentlüfters zu schaffen.

Zur Lösung dieser Aufgabe lehrt die Erfindung bei einem gattungsgemäßen Verfahren zum Herstellen einer Rohrdurchführung, insbesondere eines Sanitärlüfters bzw. Dachentlüfters, für eine Dacheindeckung, dass die Grundplatte und/ oder das Rohr als Kunststoff-Formteil aus einem Faserverbundwerkstoff ausgebildet ist,
wobei zumindest ein Faserhalbzeug, z. B. eine Fasermatte, in eine Form eingelegt wird
und anschließend eine Formmasse mit zumindest einem ungesättigten Polyesterharz und zumindest einem dem Polyesterharz oder den Polyesterharzen zugeordneten Härter in die Form eingebracht wird,
wobei die Formmasse (bzw. das Polyesterharz mit dem Härter) unter Einschluss des Faserhalbzeuges (in der Form) unter Bildung des (duroplastischen) Formteils aushärtet.

Vorzugsweise werden zumindest zwei verschiedene ungesättigte Polyesterharze verwendet. Die Herstellung erfolgt nach einem bevorzugten Vorschlag der Erfindung im Wege des Spritzpressens, welches auch als Transferpressen bzw. Resin Transfer Moulding (RTM) bezeichnet wird. Das Einbringen der Formmasse in die Form erfolgt dabei vorzugsweise im Wege einer Niederdruck-Einspritzung.

Die Erfindung geht dabei von der Erkenntnis aus, dass sich besonders formstabile und insbesondere auch hitzebeständige Grundplatten für solche Rohrdurchführungen aus einem duroplastischen Faserverbundwerkstoff herstellen lassen. Die Werkzeugkosten sind verhältnismäßig gering, so dass verschiedenste Formen von Grundplatten wirtschaftlich hergestellt werden können. Im Zuge der Herstellung wird ein geeignetes Faserhalbzeug, z. B. eine Glasfasermatte oder auch mehrere Glasfasermatten in passendem Zuschnitt in das Werkzeug bzw. in die Form eingelegt. Anschließend wird die Formmasse durch entsprechende Kanäle in die geschlossene und gegebenenfalls beheizte Form gepresst. Das ungesättigte Polyesterharz wird vorzugsweise in einer Vorkammer oder Mischvorrichtung mit den weiteren Komponenten, insbesondere dem Härter zu der Formmasse gemischt.

Besonders bevorzugt werden zumindest zwei verschiedene ungesättigte Polyesterharze verwendet, so dass eine einwandfreie Anpassung der Harzmischung an die gewünschten Eigenschaften erfolgen kann. Bei dem ersten ungesättigten Polyesterharz kann es sich beispielsweise um ein mittelreaktives, ungesättigtes Polyesterharz auf DCPD-Basis handeln. Vorzugsweise wird ein niedrigviskoses, tixotrophes und beschleunigtes Polyesterharz eingesetzt.

Bei dem zweiten Polyesterharz kann es sich vorzugsweise um ein unbeschleunigtes, nicht tixotrophes Polyesterharz handeln.

Das erste Polyesterharz und das zweite Polyesterharz sind nach einem weiteren Vorschlag der Erfindung in einem Gewichtsverhältnis von 90:10 bis 60:40, vorzugsweise 95:15 bis 70:30 in der Formmasse enthalten. Ferner kann es zweckmäßig sein, der Formmasse bzw. dem Polyesterharz oder den Polyesterharzen zumindest einen Füllstoff beizumischen. Bei dem Füllstoff kann es sich beispielsweise um einen mineralischen Füllstoff, vorzugsweise einen carbonathaltigen Füllstoff, z. B. um Dolomit, handeln. Der Gewichtsanteil des Füllstoffes innerhalb der Formmasse kann 5 % bis 20 %, vorzugsweise 7 % bis 15 % betragen.

Insgesamt können die Komponenten in folgenden Anteilen (bezogen auf das Gewicht) in der Formmasse enthalten sein:
- erstes Polyesterharz 78 bis 65 Gewichtsanteile,
- zweites Polyesterharz 15 bis 20 Gewichtsanteile,
- Füllstoff 7 bis 15 Gewichtsanteile.

Das Gewicht des eingesetzten Faserhalbzeuges kann - bezogen auf das Gewicht der Formmasse etwa 10 % bis 30 %, vorzugsweise 15 % bis 25 % betragen. Als Faserhalbzeug kann vorzugsweise eine Glasfasermatte oder auch mehrere Glasfasermatten eingesetzt werden.

Als Härter wird bevorzugt ein Methylethylketonperoxid-Härter (MEKP) eingesetzt. Das Gewicht des eingesetzten Härters beträgt vorzugsweise 1 % bis 3 %, bezogen auf das Gewicht der Formmasse. Vorzugsweise können auf 100 Anteile Harz zwei Anteile Härter kommen. Anteile meint Gewichtsanteile. Dabei kann vorzugsweise ein Härter verwendet werden, welcher beiden oder mehreren Polyesterharzen zugeordnet ist. Es können jedoch auch mehrere verschiedene Härter eingesetzt werden.

Ferner liegt es im Rahmen der Erfindung, dass ein geeigneter Beschleuniger eingesetzt wird. Insoweit kann es sich beispielsweise um einen Kobald-Beschleuniger handeln. Dabei können auf 100 Anteile Harz zwei Anteile Beschleuniger kommen. Anteile meint Gewichtsanteile.

Insgesamt entsteht im Rahmen der erfindungsgemäßen Herstellung ein duroplastisches faserverstärktes Kunststoff-Formteil. Insoweit kann es sich besonders bevorzugt um die Grundplatte des beschriebenen Dachentlüfters handeln. Dann wird vorzugsweise ein Faserhalbzeug eingelegt, welches einen (zentralen) Ausschnitt aufweist, welcher bei dem fertigen Formteil die Durchbrechung bzw. Durchtrittsöffnung bildet. Es liegt jedoch auch im Rahmen der Erfindung, dass das Rohr auf die erfindungsgemäße Weise hergestellt wird. Die in dem erfindungsgemäßen Prozess der Harzpolymerisation hergestellten Ver bundwerkstoffe zeichnen sich durch sehr gute mechanische und chemische Widerstandsfähigkeit aus. Sie sind beständig gegen Lösungsmittel, Säuren, Wasser sowie insbesondere auch hohe Temperaturen. Selbst bei Temperaturen über 90° C kommt es nicht zu einer Erweichung des Formteils.

Um die Widerstandsfähigkeit und insbesondere die Witterungsbeständigkeit weiter zu verbessern, liegt es im Rahmen der Erfindung, dass die hergestellten Formteile nach dem Aushärten mit einer Farbbeschichtung, z. B. einer Lackierung bzw. Lackschicht versehen werden. In diesem Zusammenhang kann es zweckmäßig sein, das Formteil vor dem Aufbringen der Farbbeschichtung mit einer Grundierung zu versehen, welche beispielsweise als Polyurethangrundierung ausgebildet sein kann. Die Farbbeschichtung erhöht nicht nur die Witterungsbeständigkeit und folglich die Beständigkeit gegen UV-Bestrahlung und Feuchtigkeit, sondern ermöglicht darüber hinaus eine ansprechende optische Gestaltung bzw. eine farbliche Anpassung nach Kundenwunsch.

Im Folgenden wird die Erfindung anhand einer lediglich ein Ausführungsbeispiel darstellenden Zeichnung näher erläutert. Es zeigen:

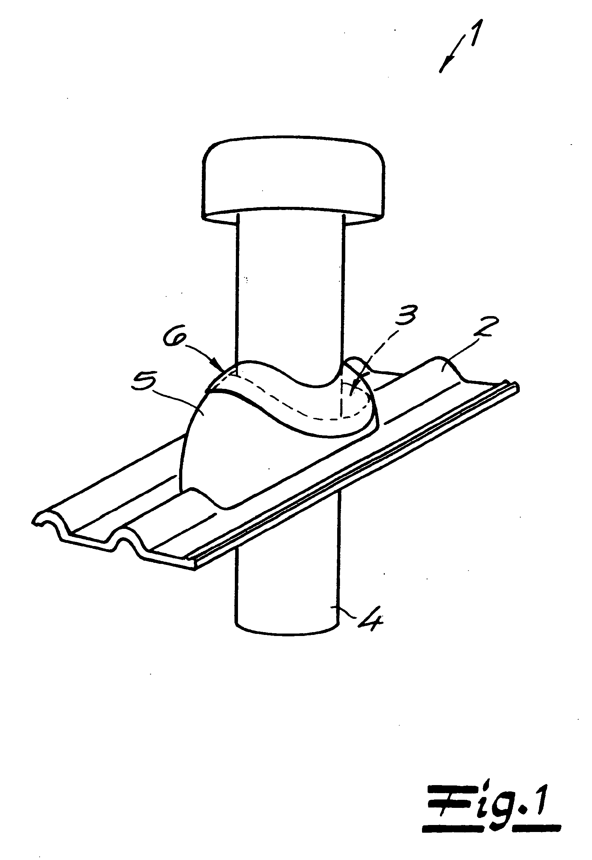

- **Fig. 1**: eine Rohrdurchführung in der Ausführungsform als Sanitärlüfter bzw. Dachentlüfter und
- **Fig. 2a bis 2c**: schematisch die Herstellung einer Grundplatte für einen solchen Sanitärlüfter.

In den Figuren ist eine Rohrdurchführung in der Ausführungsform als Sanitär lüfter bzw. Dachentlüfter für eine Dacheindeckung dargestellt. Dieser Sanitärlüfter 1 besteht aus einer profilierten Grundplatte 2 mit einer Öffnung 3 sowie einem durch die Öffnung hindurchgeführten Rohr 4. Die Grundplatte 2 ist einstückig hergestellt. Sie weist einen kuppelartigen Dom 5 auf, in dessen Scheitelbereich die Durchtrittsöffnung 3 für das neigungsverstellbare Rohr 4 angeordnet ist. Die Grundplatte 2 ist mit dem Dom 5 einstückig gefertigt.

Das Rohr 4 kann einstückig oder auch mehrstückig gefertigt sein. Es weist ein kragenartiges Haubenteil 6 auf, welches in seiner Form an die Form des Doms 5 angepasst ist und im Zuge der Montage auf den Dom 5 aufgesetzt wird. Auf diese Weise gelingt eine Anpassung der Montageposition des Rohres 4 an die Dachneigung. Nach erfolgter Justage wird das Rohr 4 mit seinem Haubenteil 6 an dem Dom 5 der Grundplatte 2 fixiert, z. B. durch Verschraubung.

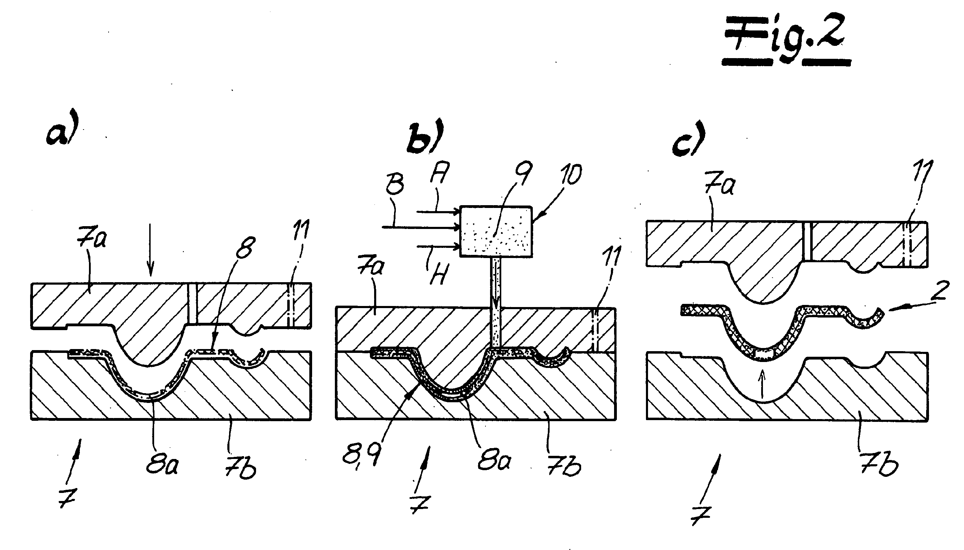

Die Grundplatte 2 der erfindungsgemäßen Rohrdurchführung ist nun im Rahmen der Erfindung als duroplastisches Kunststoff-Formteil aus einem Faserverbundwerkstoff ausgebildet. Die Herstellung erfolgt im Wege des Spritzpressens, welches auch als Resin-Transfer-Moulding (RTM) bezeichnet wird (vgl. Fig. 2a, 2b und 2c).

Zur Herstellung einer solchen Grundplatte 2 wird zunächst in ein Werkzeug 7 bzw. in eine Form (aus Oberwerkzeug 7a und Unterwerkzeug 7b) ein Faserhalbzeug 8, z. B. eine Fasermatte eingelegt. Fig. 2a zeigt die geöffnete Form 7 mit angedeuteter Fasermatte 8. In der Fasermatte 8 kann ein Ausschnitt 8a für die Durchbrechung 3 der Grundplatte vorgesehen sein.

Anschließend wird die Form 7 gegebenenfalls unter Zwischenschaltung von Dichtungen geschlossen. Dabei kann die Form mit einer Presse verschlossen werden, welche z. B. als Schraubenpresse, Spindelpresse oder auch als hydraulische oder pneumatische Presse ausgebildet sein kann. Die Presse ist in den Figuren nicht dargestellt. Anschließend wird eine Harzmischung 9 in den Formraum eingepresst (Fig. 2b). Dazu werden zumindest die erforderlichen Mischungskomponenten, insbesondere das Harz A, das Harz B und der Härter H in einer Mischkammer 10 oder Mischvorrichtung gemischt und von dort wird die Harzmischung 9 in den Formraum eingespritzt. Zum Einbringen der Komponenten in die Mischvorrichtung 10 und/oder zum Einbringen der Mischung in den Formraum kann eine nicht dargestellte Pumpe vorgesehen sein. Außerdem kann es zweckmäßig sein, einen oder mehrere Entlüftungskanäle 11 vorzusehen.

Die Harzmischung 9 härtet unter Einschluss des Faserhalbzeuges 8 in der Form 7 aus, so dass die erfindungsgemäße Grundplatte 2 als duroplastisches Kunststoff-Formteil entsteht. In Fig. 2c ist angedeutet, dass die Form nach der erfolgten Aushärtezeit geöffnet und das Kunststoff-Formteil aus der Form entnommen oder gegebenenfalls ausgeworfen wird.

Anschließend werden unerwünschte Vorsprünge, Grate, Warzen oder dergleichen von dem Formteil entfernt. Dann wird vorzugsweise eine Grundierung aus z. B. Polyurethan oder auf Polyurethanbasis aufgebracht. Anschließend kann noch eine Lackierung in der gewünschten Farbe aufgebracht werden.

## Patentansprüche

1. Verfahren zum Herstellen einer Rohrdurchführung (1) für eine Dacheindeckung, insbesondere eines Sanitärlüfters, welche zumindest eine Grundplatte (2) mit einer Öffnung (3) und ein durch die Öffnung (3) hindurch geführtes oder hindurchführbares Rohr (4) aufweist, **dadurch gekennzeichnet,**
**dass** die Grundplatte (2) und/oder das Rohr (4) als Kunststoff-Formteil aus einem Faserverbundwerkstoff ausgebildet ist/sind,
wobei zumindest ein Faserhalbzeug (8), z. B. eine Fasermatte, in eine Form (7) eingelegt wird und
anschließend eine Formmasse (9) mit zumindest einem ungesättigten Polyesterharz (A, B), vorzugsweise zumindest zwei verschiedenen ungesättigten Polyesterharzen, und zumindest einem dem Polyesterharz (A, B) oder den Polyesterharzen (A, B) zugeordneten Härter (H) in die Form (7) eingebracht werden,
wobei die Formmasse (9) unter Einschluss des Faserhalbzeuges (8) unter Bildung des Formteils aushärtet.

2. Verfahren nach Anspruch 1, **dadurch gekennzeichnet, dass** das erste Polyesterharz (A) und das zweite Polyesterharz (B) in einem Gewichtsverhältnis von 90:10 bis 60:40, vorzugsweise 95:15 bis 70:30 in der Formmasse enthalten sind.

3. Verfahren nach Anspruch 1 oder 2, **dadurch gekennzeichnet, dass** die Formmasse (9) neben dem Polyesterharz bzw. den Polyesterharzen (A, B) zumindest einen Füllstoff, z. B. einen mineralischen Füllstoff, aufweist, wobei der Gewichtsanteil des Füllstoffes bzw. der Füllstoffe in der Formmasse z. B. 5 % bis 20 %, vorzugsweise 7 % bis 15 % (bezogen auf das Gewicht) beträgt.

4. Verfahren nach Anspruch 3, **dadurch gekennzeichnet, dass** das erste Polyesterharz (A), das zweite Polyesterharz (B) und der Füllstoff in folgenden Gewichtsanteilen in der Formmasse enthalten sind:
- erstes Polyesterharz 85 bis 60 Gewichtsanteile, vorzugsweise 78 bis 65 Gewichtsanteile,
- zweites Polyesterharz 10 bis 25 Gewichtsanteile; vorzugsweise 15 bis 20 Gewichtsanteile,
- Füllstoff 5 bis 20 Gewichtsanteile, vorzugsweise 7 bis 15 Gewichtsanteile.

5. Verfahren nach einem der Ansprüche 1 bis 4, **dadurch gekennzeichnet, dass** das Gewicht des Faserhalbzeuges (8) bezogen auf das Gewicht der Formmasse (9) 10 % bis 30 %, vorzugsweise 15 % bis 25 % beträgt.

6. Verfahren nach einem der Ansprüche 1 bis 5, **dadurch gekennzeichnet, dass** als erstes Polyesterharz (A) ein beschleunigtes Polyesterharz verwendet wird und/oder, dass als erstes Polyesterharz (A) ein tixotrophes Polyesterharz verwendet wird.

7. Verfahren nach einem der Ansprüche 1 bis 6, **dadurch gekennzeichnet, dass** als zweites Polyesterharz (B) ein unbeschleunigtes Polyesterharz verwendet wird und/oder, dass als zweites Polyesterharz (B) ein nicht tixotrophes Polyesterharz verwendet wird.

8. Verfahren nach einem der Ansprüche 1 bis 7, **dadurch gekennzeichnet, dass** als Härter (H) ein MEKP-Härter verwendet wird (Methylethylketonperoxid), wobei der Gewichtsanteil des Härters in der Formmasse vorzugsweise 1 % bis 3%, z. B. 2 % beträgt.

9. Verfahren nach einem der Ansprüche 1 bis 8, **dadurch gekennzeichnet, dass** der Formmasse (9) bzw. dem Polyesterharz oder den Polyesterharzen zumindest ein Beschleuniger beigemischt wird, z. B. ein Kobalt-Beschleuniger.

10. Verfahren nach einem der Ansprüche 1 bis 9, **dadurch gekennzeichnet, dass** das Formteil im Wege des Spritzpressens hergestellt wird.

11. Verfahren nach einem der Ansprüche 1 bis 10, **dadurch gekennzeichnet, dass** das Formteil nach dem Aushärten mit einer Farbbeschichtung, z. B. einem Lack, versehen wird.

12. Verfahren nach einem der Ansprüche 1 bis 11, **dadurch gekennzeichnet, dass** das Formteil nach dem Aushärten, und vorzugsweise vor dem Aufbringen der Farbbeschichtung, mit einer Grundierung, z. B. auf Polyurethanbasis, versehen wird.

13. Verfahren nach einem der Ansprüche 1 bis 12, wobei die Grundplatte (2) einen kuppelartigen Dom (5) aufweist, in dessen Scheitelbereich die Durchtrittsöffnung (3) für das neigungsverstellbare Rohr (4) angeordnet ist, wobei das Rohr (4) z. B. ein kragenartiges Haubenteil (6) aufweist, welches auf den kuppelartigen Dom (5) der Grundplatte (2) aufgesetzt ist.

14. Rohrdurchführung, insbesondere Sanitärlüfter, hergestellt nach einem Verfahren nach einem der Patentansprüche 1 bis 13.

## Claims

1. A method for producing a pipe lead through (1) for a roof covering, particularly of a sanitation vent, having at least a baseplate (2) with an opening (3) and a pipe (4) that is passed through or can be passed through the opening (3), **characterized in that**
the baseplate (2) and/or the pipe (4) is/are constructed from a as fibre composite material as a plastic moulded part,
wherein at least one fibre semifinished product (8), for example a fibre mat, is placed in a mould (7) and
a moulding compound (9) including at least one unsaturated polyester resin (A, B), preferably at least two different unsaturated polyester resins, and at least one curing agent (H) assigned to the polyester resin (A, B) or the polyester resins (A, B) are introduced into the mould (7),
wherein the moulding compound (9) is cured, incorporating the fibre semifinished product (8), to form the moulded part.

2. The method as recited in claim 1, **characterized in that** the first polyester resin (A) and the second polyester resin (B) are included in the moulding compound in a weight ratio from 90:10 to 60:40, preferably from 95:15 to 70:30.

3. The method as recited in claim 1 or 2, **characterized in that** besides the polyester resin or polyester resins (A, B) the moulding compound (9) also contains at least one filler substance, for example a mineral filler substance, wherein the proportion by weight of the filler substance or filler substances in the moulding compound is for example 5% to 20%, preferably 7% to 15% (relative to the weight).

4. The method as recited in claim 3, **characterized in that** the first polyester resin (A), the second polyester resin (B) and the filler substance are included in the moulding compound in the following proportions by weight:
- first polyester resin 85 to 60 percent by weight, preferably 78 to 65 percent by weight,
- second polyester resin 10 to 25 percent by weight, preferably 15 to 20 percent by weight,
- filler substance 5 to 20 percent by weight, preferably 7 to 15 percent by weight.

5. The method as recited in any of claims 1 to 4, **characterized in that** the weight of the fibre semifinished product (8) is 10% to 30%, preferably 15% to 25% of the weight of the moulding compound (9).

6. The method as recited in any of claims 1 to 5, **characterized in that** an accelerated polyester resin is uses as the first polyester resin (A), and/or that a non-thixotropic polyester resin is used as the first polyester resin (A).

7. The method as recited in any of claims 1 to 6, **characterized in that** an unaccelerated polyester resin is uses as the second polyester resin (B), and/or that a non-thixotropic polyester resin is used as the second polyester resin (B).

8. The method as recited in any of claims 1 to 7, **characterized in that** an MEKP (methylethyl ketone peroxide) curing agent is used as the curing agent (H), wherein the proportion by weight of the curing agent in the moulding compound is preferably 1% to 3%, for example 2%.

9. The method as recited in any of claims 1 to 8, **characterized in that** at least one accelerator, for example a cobalt accelerator, is mixed with the moulding compound (9) and the polyester resin or polyester resins.

10. The method as recited in any of claims 1 to 9, **characterized in that** the moulded part is produced by transfer moulding.

11. The method as recited in any of claims 1 to 10, **characterized in that** the moulded part is provided with a coloured coating, for example a coat of paint, after curing.

12. The method as recited in any of claims 1 to 11, **characterized in that** the moulded part is provided with a priming coat, for example on a polyurethane base, after curing and preferably before the application of the coloured coating.

13. The method as recited in any of claims 1 to 12, wherein the baseplate (2) has a bulged dome (5) in whose crown region the leadthrough opening (3) for the inclinable pipe is located, wherein the pipe (4) has a collar-like cowling element (6), for example, which is fitted on top of the dome (5) of the baseplate (2).

14. A pipe leadthrough, particularly a sanitation vent, produced according to a method as recited in any of claims 1 to 13.

## Revendications

1. Procédé de réalisation d'un passage pour un tube (1) dans la couverture d'un toit, notamment pour une aération de sanitaire, comportant au moins une plaque de base (2) avec un orifice (3) et un tube (4) passant par ledit orifice (3) ou pouvant y passer, **caractérisé en ce que**
ladite plaque de base (2) et/ou ledit tube (4) est/sont réalisé(s) sous forme d'une pièce moulée en matière plastique, à partir d'un matériau composite à fibres,
au moins un produit fibreux semi-fini (8), par exemple un mat de fibre, étant déployé dans un moule (7) et
une masse moulable (9) avec au moins une résine de polyester insaturée (A, B), de préférence avec au moins deux résines de polyester insaturées différentes, et avec au moins un agent de durcissement (H) associé à ladite résine de polyester (A, B) ou auxdites résines de polyester (A, B) étant ensuite introduite dans ledit moule (7),
ladite masse moulable (9) durcissant en enfermant ledit produit fibreux semi-fini (8) pour former ladite pièce moulée.

2. Procédé selon la revendication 1, **caractérisé en ce que** ladite première résine de polyester (A) et ladite deuxième résine de polyester (B) sont contenues dans ladite masse moulable dans un rapport de poids compris entre 90:10 et 60:40, de préférence entre 95:15 et 70:30.

3. Procédé selon les revendications 1 ou 2, **caractérisé en ce que** ladite masse moulable (9) comporte, outre ladite résine de polyester et/ou lesdites résines de polyester (A, B), au moins une charge, par exemple une charge minérale, la proportion pondérale de ladite charge et/ou desdites charges dans ladite masse moulable étant, par exemple, comprise entre 5 % et 20 %, de préférence entre 7 % et 15 % (par rapport au poids).

4. Procédé selon la revendication 3, **caractérisé en ce que** ladite première résine de polyester (A), ladite deuxième résine de polyester (B) et ladite charge sont contenues dans ladite masse moulable dans les proportions pondérales suivantes :
- 85 à 60 parts en poids, de préférence 78 à 65 parts en poids, de ladite première résine de polyester,
- 10 à 25 parts en poids, de préférence 15 à 20 parts en poids, de ladite deuxième résine de polyester,
- 5 à 20 parts en poids, de préférence 7 à 15 parts en poids, de ladite charge.

5. Procédé selon l'une des revendications 1 à 4, **caractérisé en ce que** le poids dudit produit fibreux semi-fini (8) est compris entre 10 % et 30 %, de préférence entre 15 % et 25 %, par rapport au poids de ladite masse moulable (9).

6. Procédé selon l'une des revendications 1 à 5, **caractérisé en ce que** l'on utilise, en tant que première résine de polyester (A), une résine de polyester accélérée et/ou que l'on utilise, en tant que première résine de polyester (A), une résine de polyester thixotropique.

7. Procédé selon l'une des revendications 1 à 6, **caractérisé en ce que** l'on utilise, en tant que deuxième résine de polyester (B), une résine de polyester non-accélérée et/ou que l'on utilise, en tant que deuxième résine de polyester (B), une résine de polyester non-thixotropique.

8. Procédé selon l'une des revendications 1 à 7, **caractérisé en ce que** l'on utilise, en tant qu'agent de durcissement (H) un agent de durcissement de type MEKP (peroxyde de méthyléthylcétone), la proportion pondérale dudit agent de durcissement dans ladite masse moulable étant préférentiellement comprise entre 1 % et 3 %, et étant par exemple de 2 %.

9. Procédé selon l'une des revendications 1 à 8, **caractérisé en ce que** l'on mélange au moins un agent accélérateur, par exemple un agent accélérateur au cobalt, à ladite masse moulable (9) ou, respectivement, à ladite résine de polyester ou auxdites résines de polyester.

10. Procédé selon l'une des revendications 1 à 9, **caractérisé en ce que** ladite pièce moulée est réalisée par moulage par injection.

11. Procédé selon l'une des revendications 1 à 10, **caractérisé en ce que** ladite pièce moulée est pourvue, une fois le durcissement terminé, d'une couche de peinture colorée, par exemple d'un vernis.

12. Procédé selon l'une des revendications 1 à 11, **caractérisé en ce que** ladite pièce moulée est pourvue, une fois le durcissement terminé et préférentiellement avant l'application d'une couche de peinture colorée, d'une sous-couche, par exemple à base de polyuréthane.

13. Procédé selon l'une des revendications 1 à 12, ladite plaque de base (2) étant pourvue d'un dôme (5) en forme de coupole, le passage (3) pour le tube (4) à inclinaison variable étant disposé dans la zone culminante de ce dernier, ledit tube (4) étant, par exemple, coiffé d'une pièce (6) apparentée à une collerette qui repose sur ledit dôme (5) en forme de couple de ladite plaque de base (2).

14. Passage pour un tube, notamment pour une aération de sanitaire, réalisé selon un procédé selon l'une des revendications 1 à 13.
